# FASCICULE DE BREVET EUROPEEN

(11) **EP 2 152 583 B1**
(45) Date de publication et mention de la délivrance du brevet: **10.08.2011**
(21) Numéro de dépôt: 08805917.5
(22) Date de dépôt: 03.06.2008
(51) Int. Cl.: B64D 33/02

(54) **REVETEMENT POUR LE TRAITEMENT ACOUSTIQUE INTEGRANT LA FONCTION DE TRAITEMENT DU GIVRE AVEC DE L'AIR CHAUD**
BESCHICHTUNG FÜR SCHALLBEHANDLUNG MIT EINER HEISSLUFTENTEISUNGSFUNKTION
COATING FOR ACOUSTIC TREATMENT INCLUDING A HOT-AIR DE-ICING FUNCTION

(30) Priorité: 08.06.2007 FR 0755586
(43) Date de publication de la demande: 17.02.2010
(73) Titulaire: Airbus Opérations SAS, 31060 Toulouse (FR)
(72) Inventeur: PORTE, Alain, F-31770 Colomiers (FR); LALANE, Jacques, F-31650 Saint Orens de Gameville (FR)
(74) Mandataire: Fantin, Laurent
(86) Numéro de dépôt international: PCT/FR2008/050974
(87) Numéro de publication internationale: WO 2009/001002

(56) Documents cités:
- EP-A- 1 103 462
- US-A- 3 516 895
- US-A- 5 841 079

## Description

La présente invention se rapporte à un revêtement pour le traitement acoustique intégrant la fonction de traitement du givre avec de l'air chaud, ledit revêtement étant destiné notamment à un bord d'attaque d'aéronef, et plus particulièrement à une entrée d'air d'une nacelle d'aéronef.

Pour limiter l'impact des nuisances sonores à proximité des aéroports, les normes internationales sont de plus en plus contraignantes en matière d'émissions sonores.

Des techniques ont été développées pour réduire le bruit émis par un aéronef, notamment en disposant, au niveau des parois des conduits des nacelles, des revêtements visant à absorber une partie de l'énergie sonore, notamment en utilisant le principe des résonateurs d'Helmholtz. De manière connue, ce revêtement acoustique comprend de l'extérieur vers l'intérieur une couche poreuse acoustiquement résistive, une structure alvéolaire et une couche réflectrice imperméable aux ondes sonores pour que le revêtement soit efficace. Pour l'instant, en raison de différentes contraintes, par exemple de mise en forme ou de compatibilité avec d'autres équipements, l'étendue des surfaces traitées est limitée. Ainsi , le revêtement est difficilement compatible avec les systèmes permettant d'éviter la formation et/ou l'accumulation de glace et/ou de givre qui sont nécessaires dans ces zones.

Ces systèmes sont divisés en deux grandes familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé. Pour la suite de la description, on entend par système ou procédé de traitement du givre, un système ou un procédé anti-givrant ou un système ou un procédé dégivrant.

La présente invention se rapporte plus particulièrement à un procédé de traitement du givre consistant à utiliser de l'air chaud prélevé au niveau du moteur et refoulé au niveau de la paroi interne des bords d'attaque. Ce système performant est difficilement compatible avec le revêtement de traitement acoustique dans la mesure où ce dernier est relativement épais et constitué de cellules contenant de l'air agissant comme un isolant.

Afin de tenter de rendre les traitements acoustique et du givre compatibles, une solution décrite dans les documents EP-1.103.462, qui montre toutes les caractéristiques du préamble de la revendication 1, et US-5.841.079 prévoit des trous dans la paroi réflectrice afin que l'air chaud pénètre dans les cellules du revêtement acoustique.

Cependant cette solution n'est pas satisfaisante pour les raisons suivantes :

Les cellules de la structure alvéolaire comportant au niveau de la couche réflectrice un ou plusieurs trous sont moins performantes en matière de traitement acoustique, les ondes se dissipant moins bien dans lesdites cellules. Pour réduire cette altération, une solution consiste à réduire la section des trous. Dans ce cas, le volume d'air à débit constant est réduit, rendant moins efficace le dégivrage. Par ailleurs, ces trous de sections réduites peuvent se boucher plus facilement, ce qui annule dans la zone correspondante la fonction de dégivrage.

Selon une autre problématique, dans la mesure où la structure alvéolaire constituée d'un nid d'abeilles est déformée lors de sa mise en place, certains trous de la couche réflectrice peuvent être disposés au droit d'une paroi latérales délimitant deux alvéoles. Dans ce cas, le fonctionnement en matière de traitement acoustique de deux alvéoles est altéré et la fonction de dégivrage est également altérée, le trou étant partiellement obturé par la paroi.

Enfin, selon une autre problématique, un équilibre de pression se formant à l'intérieur de la lèvre d'entrée d'air, il n'est pas possible d'isoler certaines parties de la lèvre afin d'y insuffler une pression d'air de dégivrage plus forte, notamment aux endroits où le givre se dépose en plus grande quantité. Par ailleurs, cette solution nécessite une bonne étanchéité entre cellules ce qui requiert une excellente étanchéité entre les parois de la structure alvéolaire et la structure acoustiquement résistive et lesdites parois et la couche réflectrice. La présente invention vise à pallier aux inconvénients de l'art antérieur en proposant un revêtement rendant compatible le traitement acoustique et le traitement du givre avec un gaz chaud, ledit revêtement étant destiné notamment à un bord d'attaque et plus particulièrement à une entrée d'air de nacelle.

A cet effet, l'invention a pour objet un revêtement pour lé traitement acoustique rapporté au niveau d'une surface .d'un aéronef, notamment au niveau d'un bord d'attaque tel qu'une entrée d'air d'une nacelle d'aéronef, ledit revêtement comprenant une couche acoustiquement résistive, au moins une structure alvéolaire et une couche réflectrice, et comprenant des conduits placés entre ladite structure alvéolaire et la structure acoustiquement résistive caractérisé en ce que, les conduits sont délimités chacun par une paroi distincte des parois de la structure alvéolaire et une des extrémités des conduits est reliée à une arrivée d'air chaud.

D'autres caractéristiques et avantages ressortiront de la description qui va suivre de l'invention, description donnée à titre d'exemple uniquement, en regard des dessins annexés sur lesquels :
- la figure 1 est une vue en perspective d'un ensemble propulsif d'un aéronef,
- la figure 2 est une coupe longitudinale illustrant une partie d'une entrée d'air d'une nacelle,
- la figure 3 est une coupe longitudinale d'une partie du revêtement acoustique selon l'invention,
- la figure 4 est une coupe selon la ligne A-A de la figure 3 illustrant une partie du revêtement acoustique selon une première variante,
- la figure 5 est une vue en perspective illustrant en détails la structure alvéolaire et les canaux pour le dégivrage selon la variante de la figure 4,
- la figure 6 est une coupe selon la ligne A-A de la figure 3 illustrant une partie du revêtement acoustique selon une seconde variante,
- la figure 7 est un schéma illustrant différentes formes envisageables pour les canaux,
- la figure 8 est une coupe illustrant une première variante d'une entrée d'air équipée d'un revêtement acoustique selon l'invention,
- la figure 9 est une coupe illustrant une deuxième variante d'une entrée d'air équipée d'un revêtement acoustique selon l'invention,
- la figure 10 est une coupe illustrant une troisième variante d'une entrée d'air équipée d'un revêtement acoustique selon l'invention,
- la figure 11 est une coupe illustrant une quatrième variante d'une entrée d'air équipée d'un revêtement acoustique selon l'invention, et
- la figure 12 est une coupe illustrant une cinquième variante d'une entrée d'air équipée d'un revêtement acoustique selon l'invention.

La présente invention est maintenant décrite appliquée à une entrée d'air d'un ensemble propulsif d'un aéronef. Cependant, elle peut s'appliquer au niveau des différents bords d'attaque d'un aéronef au niveau desquels un traitement acoustique et un traitement du givre sont opérés, par exemple le bord d'attaque des ailes.

Pour la suite de la description, on entend par givre aussi bien le givre que la glace, de toutes natures, de toutes structures et de toutes les épaisseurs.

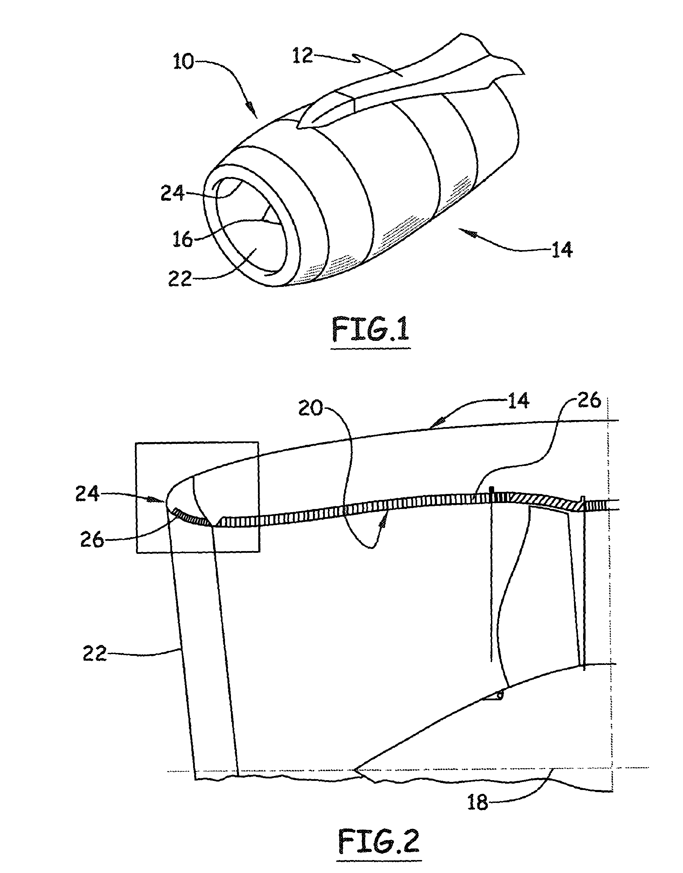

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante 16. L'axe longitudinal de la nacelle est référencé 18.

La nacelle 14 comprend une paroi intérieure 20 délimitant un conduit avec une entrée d'air 22 à l'avant.

La partie sommitale 24 de l'entrée d'air 22 décrit une forme sensiblement circulaire qui s'étend dans un plan qui peut être sensiblement perpendiculaire à l'axe longitudinal 18, ou non perpendiculaire, avec la partie sommitale située à 12h légèrement avancée. Toutefois, d'autres formes d'entrée d'air peuvent être envisagées.

Pour la suite de la description, on entend par surface aérodynamique l'enveloppe de l'aéronef en contact avec le flux aérodynamique.

Pour limiter l'impact des nuisances sonores, un revêtement 26 visant à absorber une partie de l'énergie sonore, notamment en utilisant le principe des résonateurs d'Helmholtz est prévu notamment au niveau des surfaces aérodynamiques. De manière connue, ce revêtement acoustique, également appelé panneau acoustique, comprend de l'extérieur vers l'intérieur une structure acoustiquement résistive 28, au moins une structure alvéolaire 30 et une couche réflectrice 32. Par couche ou structure, on entend une ou plusieurs couches de même nature ou non.

La structure acoustiquement résistive 28 est une structure poreuse ayant un rôle dissipatif, transformant partiellement l'énergie acoustique de l'onde sonore la traversant en chaleur.

Selon un mode de réalisation, la structure acoustiquement résistive 28 comprend au moins une couche poreuse sous la forme par exemple d'un tissu métallique ou non tel qu'un Wiremesh et au moins une couche structurale par exemple une tôle métallique ou composite avec des trous oblongs ou des microperforations.

La structure réflectrice 32 est imperméable aux ondes sonores et ne comprend aucun orifice susceptible d'affecter le traitement acoustique.

La structure alvéolaire 30 correspond à un volume délimité par d'une part une première surface imaginaire sur laquelle peut être rapportée la couche réflectrice 32, et d'autre part, une seconde surface imaginaire sur laquelle peut être rapportée la couche acoustiquement résistive 28.

La distance séparant la première surface imaginaire et la seconde surface imaginaire peut ne pas être constante. Ainsi, cette distance peut être plus importante au niveau de la lèvre de l'entrée d'air afin de conférer à ladite structure une plus grande résistance notamment aux chocs.

La structure alvéolaire 30 comprend une pluralité de conduits débouchant d'une part au niveau de la première surface, et d'autre part, au niveau de la seconde surface. Ces conduits sont obturés par d'une part la structure poreuse acoustiquement résistive, et d'autre part, la couche réflectrice de manière à former chacun une cellule.

De préférence, deux conduits adjacents sont séparés par une paroi latérale. Selon un premier mode de réalisation, la structure alvéolaire 30 est constituée d'un nid d'abeilles. Ainsi, les conduits ont une forme hexagonale et les conduits adjacents sont séparés par des parois latérales.

Selon un deuxième mode de réalisation, la structure alvéolaire 30 comprend une série de premières bandes disposées au niveau de surfaces sécantes, lesdites premières bandes étant non sécantes entre elles et espacées entre elles, et au moins une deuxième série de deuxièmes bandes disposées au niveau de surfaces sécantes, lesdites deuxièmes bandes étant non sécantes entre elles et espacées entre elles. Les premières bandes sont sécantes avec les deuxièmes bandes de manière à délimiter un conduit entre d'une part deux premières bandes adjacentes et d'autre part deux deuxièmes bandes adjacentes. Par surface sécante, on entend un plan ou une surface qui est sécant avec la première surface imaginaire et avec la seconde surface imaginaire.

Ainsi, on obtient des conduits avec quatre faces latérales.

Pour simplifier la conception, on disposera les premières bandes dans des plans radiaux contenant l'axe longitudinal de la nacelle.

Pour obtenir une structure plus rigide, on disposera les secondes bandes de manière à ce qu'elles soient sensiblement perpendiculaires aux premières bandes afin d'obtenir des conduits avec des sections carrées ou rectangulaires. Cette solution permet également de simplifier la conception.

Ces différentes couches et structures ne sont pas plus décrites car elles sont connues de l'homme du métier.

Pour réduire encore les nuisances sonores, l'entrée d'air 22 comprend un revêtement acoustique 26 sur au moins une partie de la surface aérodynamique. Selon un mode de réalisation, ce revêtement acoustique 26 s'étend de la paroi intérieure 20 de la nacelle jusqu'à la partie sommitale 24 de l'entrée d'air sur toute la périphérie de l'entrée d'air.

Pour limiter la formation du givre ou éviter son accumulation, l'entrée d'air 22 comprend des moyens pour traiter le givre, utilisant de l'air chaud prélevé au niveau du moteur pour réchauffer la surface aérodynamique.

Selon l'invention, le revêtement acoustique 26 comprend des conduits ou canaux 34 placés entre la structure alvéolaire 30 et la structure acoustiquement résistive 28, les conduits étant délimités chacun par une paroi 36 distincte des parois de la structure alvéolaire 30 et une des extrémités des conduits étant reliée à une arrivée d'air chaud.

Cette solution permet de limiter les risques de communication entre l'intérieur des conduits et les cellules de la structure alvéolaire 30, et donc les risques de perturbations du traitement acoustique.

Selon un autre avantage, l'air chaud occupe un volume nettement inférieur aux solutions de l'art antérieur selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, ce qui permet de le rejeter sans risque de brûlures de la paroi traversée, notamment lorsque cette dernière est réalisée en un matériau sensible à la chaleur tel que le composite. Avantageusement, les conduits 34 sont disposés de manière judicieuse par rapport aux cellules de la structure alvéolaire afin de ne pas affecter l'efficacité du traitement acoustique, notamment en conservant un taux de surface ouverte homogène pour la structure acoustiquement résistive.

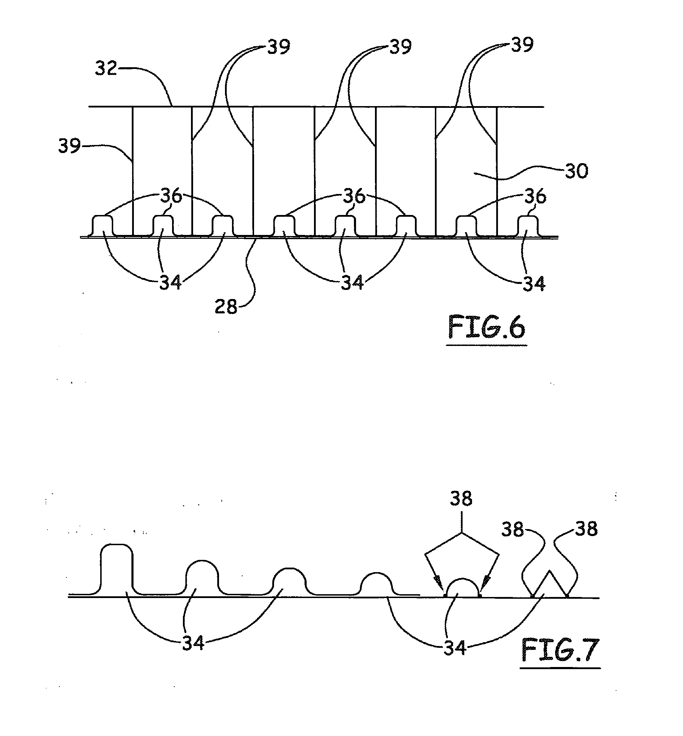

Selon une variante illustrée sur la figure 7, les conduits 34 sont obtenus par la mise en forme d'une couche avec des parties concaves délimitant les conduits, ladite couche étant intercalée entre la couche acoustiquement résistive et la structure alvéolaire, les parties de la couche non déformées étant plaquées contre la couche acoustiquement résistive 28. Selon une autre variante illustré sur la figure 7, les conduits 34 sont distincts et ont chacun une section concave avec de part et d'autre des extrémités 38 susceptibles d'être reliées à la face intérieure de la structure acoustiquement résistive.

Les conduits ou la couche formant les conduits peuvent être réalisés avec une ou plusieurs couches métalliques ou composites.

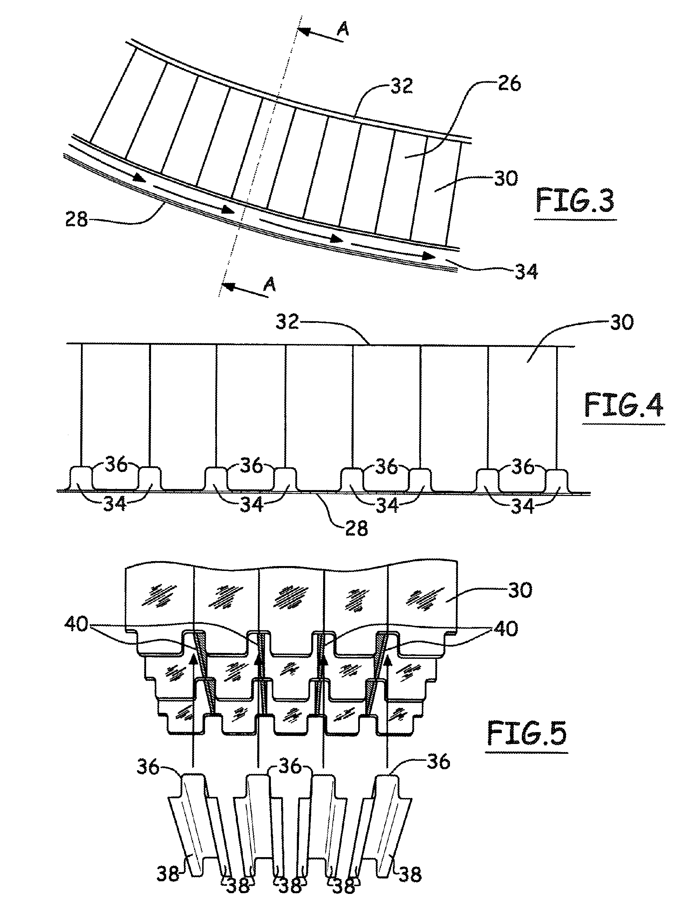

Selon un mode de réalisation illustré sur les figures 4 et 5, les conduits 34 sont disposés au droit de certaines parois délimitant les cellules de la structure alvéolaire, les conduits étant disposés de préférence de manière symétrique par rapport auxdites parois.

Selon un autre mode de réalisation illustré sur la figure 6, les conduits 34 sont disposés au droit de certaines cellules et, leurs parois 36 sont distinctes des parois 39 des cellules de la structure alvéolaire 30. Cet agencement permet d'obtenir un panneau plus résistant dans la mesure où les parois délimitant les cellules ne reposent pas sur les conduits mais sur la couche acoustiquement résistive.

Selon les variantes illustrées sur la figure 7, les conduits 34 peuvent avoir des sections différentes, en U, en V, en Oméga avec une hauteur plus ou moins importante. Cependant, l'invention n'est pas limitée aux sections illustrées.

De préférence, les conduits 34 sont sensiblement rectilignes pour limiter les pertes de charge. Selon un mode de réalisation, les conduits 34 sont parallèles entre eux et disposés dans des plans radiaux passant par l'axe de la nacelle. Cette configuration simplifie la circulation de l'air chaud et limite la surconsommation de l'aéronef.

En complément, la structure alvéolaire 30 comprend sur la face susceptible d'être plaquée contre la structure acoustiquement résistive des rainures 40 dont les formes sont adaptées à celles des conduits, comme illustré sur la figure 5. Selon une autre caractéristique, la densité des conduits 34 peut être variable afin d'ajuster le dégivrage, notamment en espaçant plus ou moins les conduits ou en faisant varier la section des conduits.

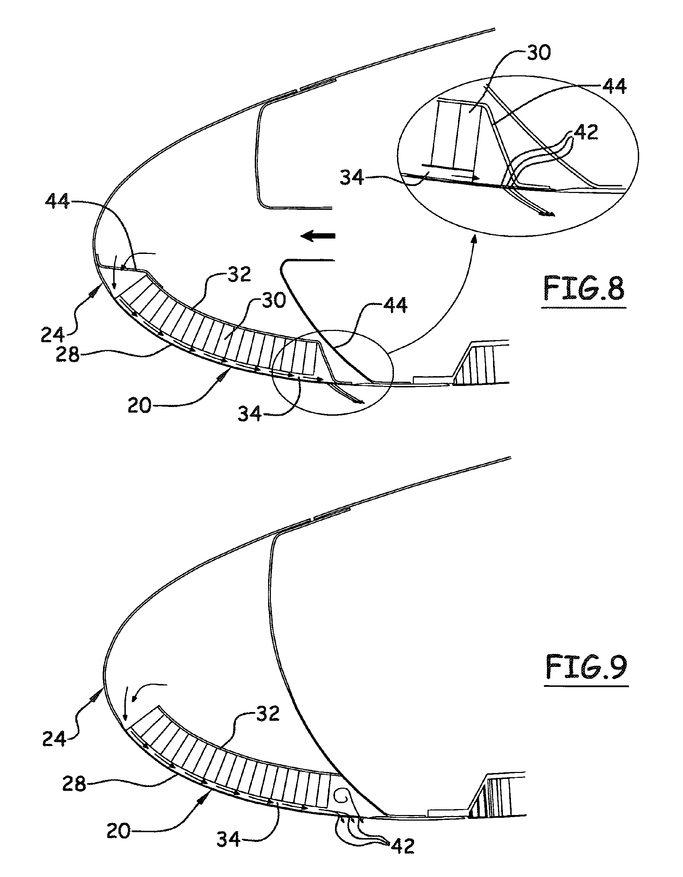

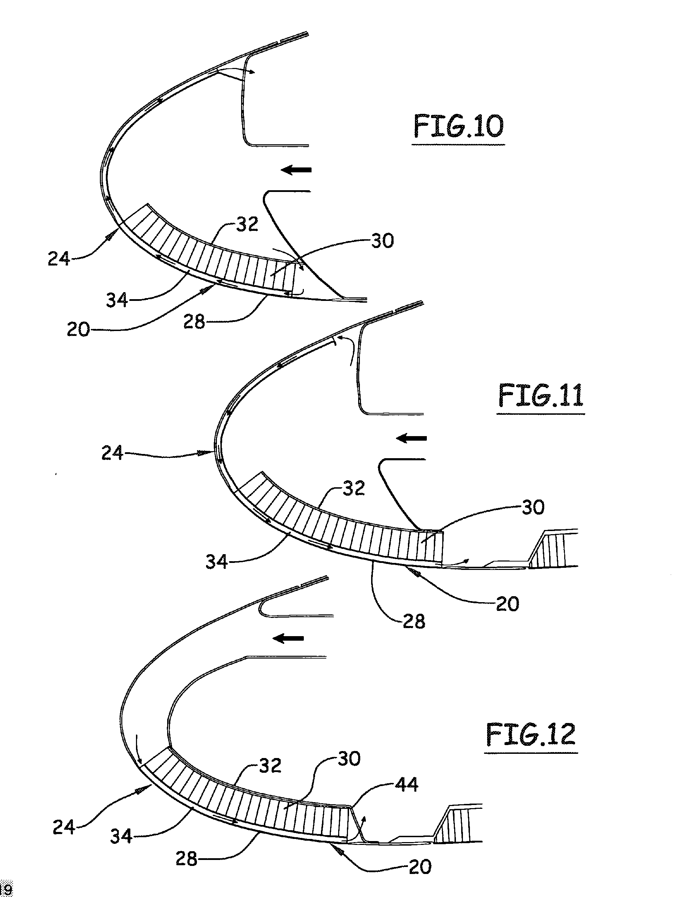

Selon les variantes, les conduits 34 ont une longueur ajustée à celle du panneau acoustique comme illustré sur les figures 8, 9 et 12 ou s'étendent au-delà dudit panneau acoustique, notamment en amont, comme illustré sur les figures 10 et 11, pour mieux canaliser l'air chaud au contact de la surface à dégivrer et augmenter la rigidité de la surface aérodynamique au niveau de l'entrée d'air en agissant comme des raidisseurs.

Selon les variantes, l'air chaud peut être refoulé via des perforations ou micro perforations 42 ménagées dans la structure acoustiquement résistive, de préférence inclinées pour orienter le flux sortant dans le sens du flux extérieur entrant dans la nacelle, comme illustré sur les figures 8 et 9, ou il peut être refoulé à l'intérieur de la nacelle pour sortir plus en aval.

Selon les variantes, l'arrivée de l'air chaud est reliée aux conduits de manière à ce que l'air chaud s'écoule dans les conduits dans le même sens que l'air extérieur entrant dans la nacelle, comme illustré sur les figures 8, 9, 11 et 12 ou à contre courant comme illustré sur la figure 10.

Selon un mode de réalisation, un cadre 44 peut être rapporté au niveau d'au moins un des bords du panneau acoustique pour répartir l'air chaud dans les différents conduits 34 et/ou collecter l'air chaud à l'extrémité aval des conduits.

## Revendications

1. Revêtement pour le traitement acoustique rapporté au niveau d'une surface d'un aéronef, notamment au niveau d'un bord d'attaque tel qu'une entrée d'air d'une nacelle d'aéronef, ledit revêtement comprenant une couche acoustiquement résistive (28), au moins une structure alvéolaire (30) et une couche réflectrice (32), et comprenant des conduits (34) placés entre ladite structure alvéolaire (30) et la structure acoustiquement résistive (28) **caractérisé en ce qu'**il, les conduits sont délimités chacun par une paroi (36) distincte des parois de la structure alvéolaire (30) et une des extrémités des conduits est apte à être reliée à une arrivée d'air chaud.

2. Revêtement pour le traitement acoustique selon la revendication 1, **caractérisé en ce que** les conduits (34) sont distincts et ont chacun une section concave avec de part et d'autre des extrémités (38) reliées à la face intérieure de la structure acoustiquement résistive.

3. Revêtement pour le traitement acoustique selon la revendication 1, **caractérisé en ce que** les conduits (34) sont obtenus par la mise en forme de manière à former des conduits (34) d'une couche intercalée entre la structure alvéolaire (30) et la couche acoustiquement résistive (28).

4. Revêtement pour le traitement acoustique selon la revendication 2 ou 3, **caractérisé en ce que** la structure alvéolaire (30) comprend sur la face susceptible d'être plaquée contre la structure acoustiquement résistive (28) des rainures (40) dont les formes sont adaptées à celles des conduits.

5. Revêtement pour le traitement acoustique selon l'une quelconque des revendications précédentes, **caractérisé en ce que** les conduits (34) sont sensiblement rectilignes et parallèles entre eux.

6. Nacelle d'aéronef comportant une entrée d'air (22) incorporant un revêtement pour le traitement acoustique selon l'une quelconque des revendications précédentes.

7. Nacelle d'aéronef selon la revendication 6, **caractérisée en ce que** les conduits (34) s'étendent en amont du revêtement pour le traitement acoustique pour former des raidisseurs.

8. Nacelle d'aéronef selon la revendication 6 ou 7, **caractérisée en ce que** la structure acoustiquement résistive comprend des perforations pour refouler l'air utilisé pour le dégivrage.

9. Nacelle d'aéronef selon l'une quelconque des revendications 6 à 8, **caractérisée en ce que** l'arrivée de l'air chaud est reliée aux conduits de manière à ce que l'air chaud s'écoule dans les conduits dans le même sens que l'air extérieur entrant dans la nacelle.

10. Nacelle d'aéronef selon l'une quelconque des revendications 6 à 8, **caractérisée en ce que** l'arrivée de l'air chaud est reliée aux conduits de manière à ce que l'air chaud s'écoule dans les conduits à contre courant par rapport à l'air extérieur entrant dans la nacelle.

## Claims

1. Coating for acoustic treatment that is connected at one surface of an aircraft, in particular at a leading edge such as an air intake of an aircraft nacelle, whereby said coating comprises an acoustically resistive layer (28), at least one alveolar structure (30), and a reflective layer (32) and pipes (34) that are placed between said alveolar structure (30) and the acoustically resistive structure (28) **characterized in that** the pipes are each delimited by a wall (36) that is separate from the walls of the alveolar structure (30) and one of the ends of the pipes is able to be connected to a hot air intake.

2. Coating for acoustic treatment according to claim 1, wherein the pipes (34) are separate and each have a concave section with ends (38) on both sides that are connected to the inside surface of the acoustically resistive structure.

3. Coating for acoustic treatment according to claim 1, wherein the pipes (34) are obtained by the shaping so as to form pipes (34) with a layer that is inserted between the alveolar structure (30) and the acoustically resistive layer (28).

4. Coating for acoustic treatment according to claim 2 or 3, wherein the alveolar structure (30) comprises grooves (40) on the surface that can be flattened against the acoustically resistive structure (28), and the shapes of said grooves are adapted to those of the pipes.

5. Coating for acoustic treatment according to any of the preceding claims, wherein the pipes (34) are essentially rectilinear and parallel to one another.

6. Aircraft nacelle that comprises an air intake (22) that incorporates a coating for acoustic treatment according to any of the preceding claims.

7. Aircraft nacelle according to claim 6, wherein the pipes (34) extend upstream from the coating for acoustic treatment to form stiffeners.

8. Aircraft nacelle according to claim 6 or 7, wherein the acoustically restive structure comprises perforations to deliver the air that is used for defrosting.

9. Aircraft nacelle according to any of claims 6 to 8, wherein the hot air intake is connected to pipes so that the hot air flows in the pipes in the same direction as the outside air that enters into the nacelle.

10. Aircraft nacelle according to any of claims 6 to 8, wherein the hot air intake is connected to pipes so that the hot air flows into the pipes in countercurrent relative to the outside air that enters into the nacelle.

## Patentansprüche

1. Beschichtung für den Schallschutz, die im Bereich einer Oberfläche eines Flugzeugs, insbesondere im Bereich einer Eintrittskante, wie einem Lufteinlass einer Gondel eines Flugzeugs, aufgebracht ist, wobei die Beschichtung eine schallwiderstandsfähige Schicht (28), wenigstens eine Wabenstruktur (30) und eine reflektierende Schicht (32) sowie Kanäle (34) umfasst, die zwischen der Wabenstruktur (30) und der schallwiderstandsfähigen Struktur (28) angeordnet sind, **dadurch gekennzeichnet, dass** die Kanäle jeweils durch eine von den Wänden der Wabenstruktur (30) getrennte Wand (36) begrenzt sind und eines der Enden der Kanäle geeignet ist, mit einem Heißluftzutritt verbunden zu werden.

2. Beschichtung für den Schallschutz nach Anspruch 1, **dadurch gekennzeichnet, dass** die Kanäle (34) getrennt sind und jeweils einen konkaven Querschnitt mit beidseitigen Enden (38) aufweisen, die mit der Innenseite der schallwiderstandsfähigen Struktur verbunden sind.

3. Beschichtung für den Schallschutz nach Anspruch 1, **dadurch gekennzeichnet, dass** die Kanäle (34) durch Informbringen erhalten werden, so dass Kanäle (34) aus einer zwischen der Wabenstruktur (30) und der schallwiderstandsfähigen Schicht (28) eingefügten Schicht gebildet werden.

4. Beschichtung für den Schallschutz nach Anspruch 2 oder 3, **dadurch gekennzeichnet, dass** die Wabenstruktur (30) auf der Seite, die geeignet ist, gegen die schallwiderstandsfähige Struktur (28) gedrückt zu werden, Nuten (40) aufweist, deren Formen denjenigen der Kanäle angepasst sind.

5. Beschichtung für den Schallschutz nach einem der vorstehenden Ansprüche, **dadurch gekennzeichnet, dass** die Kanäle (34) im Wesentlichen geradlinig sind und parallel zueinander verlaufen.

6. Gondel eines Flugzeugs, die einen Lufteinlass (22) umfasst, der eine Beschichtung für den Schallschutz nach einem der vorstehenden Ansprüche enthält.

7. Gondel eines Flugzeugs nach Anspruch 6, **dadurch gekennzeichnet, dass** die Kanäle (34) sich vor der Beschichtung für den Schallschutz erstrecken, um Versteifungen zu bilden.

8. Gondel eines Flugzeugs nach Anspruch 6 oder 7, **dadurch gekennzeichnet, dass** die schallwiderstandsfähige Struktur Löcher aufweist, um die für die Enteisung verwendete Luft auszustoßen.

9. Gondel eines Flugzeugs nach einem der Ansprüche 6 bis 8, **dadurch gekennzeichnet, dass** der Heißluftzutritt mit den Kanälen derart verbunden ist, dass die Heißluft aus den Kanälen in der gleichen Richtung wie die in die Gondel eintretende Außenluft strömt.

10. Gondel eines Flugzeugs nach einem der Ansprüche 6 bis 8, **dadurch gekennzeichnet, dass** der Heißluftzutritt mit den Kanälen derart verbunden ist, dass die Heißluft aus den Kanälen im Gegenstrom zu der in die Gondel eintretenden Außenluft strömt.
